# EUROPÄISCHE PATENTANMELDUNG

(11) **EP 3 339 345 A1**
(43) Veröffentlichungstag der Anmeldung: **27.06.2018**
(21) Anmeldenummer: 16206583.3
(22) Anmeldetag: 23.12.2016
(51) Int. Cl.: C08G 18/76, C08G 18/79, C08G 18/22, C09J 175/04, C08G 18/48, C08G 18/65, C08G 18/69, C08G 18/32, C08G 18/36

(54) **ZWEIKOMPONENTIGE POLYURETHANZUSAMMENSETZUNG**

(71) Anmelder: SIKA TECHNOLOGY AG, 6340 Baar (CH)
(72) Erfinder: Kelch, Steffen, 8102 Oberengstringen (CH)
(74) Vertreter: Sika Patent Attorneys

(57) **Zusammenfassung**

Die vorliegende Erfindung betrifft eine zweikomponentige Polyurethanzusammensetzung bestehend aus einer Polyolkomponente und einer Polyisocyanatkomponente, wobei die Polyolkomponente mindestens ein Umsetzungsprodukt von Ricinusöl mit Ketonharzen **A1,** mindestens ein aliphatisches Triol **A2,** vorzugsweise ein aliphatisches Diol **A3,** ein Polybutadienpolyol **A4** und mindestens ein hydroxyliertes Tallöl-basiertes Polyesterpolyol **A5** umfasst. Die erfindungsgemässe Polyurethanzusammensetzung verfügt über eine hohe Festigkeit und eine nur schwach ausgeprägte Abhängigkeit der mechanischen Eigenschaften, insbesondere der Festigkeit, von der Temperatur. Weiter vermag die Zusammensetzung bei Umgebungsbedingungen ohne Blasenbildung auszuhärten, auch in Anwesenheit von Substraten, welche Schäumungsreaktionen aufgrund von vorhandener Restfeuchtigkeit typischerweise begünstigen, wie beispielsweise Glasfasergewebe.

## Beschreibung

### Technisches Gebiet

Die Erfindung betrifft das Gebiet der zweikomponentigen Polyurethanzusammensetzungen und ihre Verwendung, insbesondere als Klebstoff.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit höhere Kräfte aufnehmen und übertragen können. Für den Einsatz als strukturelle Klebstoffe werden hohe Ansprüche in Bezug auf die Festigkeit gestellt, da derartige Klebstoffe Elemente von Last tragenden Strukturen darstellen.

Es besteht insbesondere der Wunsch nach Klebstoffen, die hohe Festigkeiten im Sinne struktureller Verklebungen über einen möglichst grossen Temperaturbereich, insbesondere im Bereich von -60 °C bis über +50 °C aufweisen/gewährleisten, verbunden mit einer wenig ausgeprägten Abhängigkeit der Festigkeit von der Temperatur. Gewünscht sind weiterhin Klebstoffe, welche bei Umgebungsbedingungen ohne Schäumungsreaktion aushärten, auch bei Substraten wie Glasfasergeweben, welche Schäumungsreaktionen beispielsweise aufgrund ihrer Affinität zur Adsorption von Luftfeuchtigkeit begünstigen.

### Darstellung der Erfindung

Aufgabe der vorliegenden Erfindung ist es daher, eine zweikomponentige Polyurethanzusammensetzung zur Verfügung zu stellen, welche über eine hohe Festigkeit und eine nur schwach ausgeprägte Abhängigkeit der mechanischen Eigenschaften, insbesondere der Festigkeit, von der Temperatur verfügt, insbesondere im Bereich von -60°C bis +50°C. Weiter soll die Zusammensetzung bei Umgebungsbedingungen ohne Schaumbildung aufgrund einer Reaktion von Isocyanatgruppen mit Feuchtigkeit aushärten, auch bei Substraten, welche Schäumungsreaktionen aufgrund von vorhandener Restfeuchtigkeit typischerweise begünstigen.

Überraschenderweise wird diese Aufgabe mit der erfindungsgemässen zweikomponentigen Polyurethanzusammensetzung gelöst. Die Zusammensetzung verfügt über eine hohe Zugfestigkeit und hohe E-moduli mit einer nur schwach ausgeprägten Abhängigkeit der mechanischen Eigenschaften, insbesondere der Zugfestigkeit und der E-moduli, von der Temperatur.

Zudem ist die Zusammensetzung besonders beständig gegenüber Schäumen durch Aufnahme von Luftfeuchtigkeit oder verbleibende Restfeuchtigkeit in der Polyolkomponente und/oder der Substrate, beispielsweise bei Glasfasergeweben.

Weiter wurde überraschenderweise gefunden, dass die erfindungsgemässen Zusammensetzungen eine erste Glasübergangstemperatur (Tg1) bei Temperaturen bei ca. -60°C sowie eine zweite dominante Glasübergangstemperatur (Tg2) bei Temperaturen über +50°C, insbesondere über +70°C, insbesondere über +90°C, aufweisen. Dies hat den Vorteil von konstanten mechanischen Eigenschaften über einen breiten und anwendungstechnisch interessanten Temperaturbereich.

Zusätzlich wurde gefunden, dass sich die mechanischen Eigenschaften nach einer Härtung bei Raumtemperatur nicht von den mechanischen Eigenschaften unterscheiden, die bei einer Härtung bei erhöhter Temperatur, d.h. einem Temperprozess, (3 h bei 80°C) erzielt werden. Dies, insbesondere zusammen mit der Erkenntnis der Unempfindlichkeit bezüglich Schäumungsreaktionen, macht die Zusammensetzung insbesondere für die Herstellung von Faserverbundwerkstoffen interessant. Dadurch kann einerseits auf eine Vortrocknung und Vorbehandlung der Fasern sowie andererseits auf eine Aushärtung bei erhöhter Temperatur/Temperprozess des Faserverbundwerkstoffs verzichtet werden, was verfahrenstechnisch einen grossen Vorteil darstellt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft zweikomponentige Polyurethanzusammensetzung bestehend aus einer Polyolkomponente **K1** und einer Polyisocyanatkomponente **K2;**
wobei die Polyolkomponente **K1** mindestens ein Umsetzungsprodukt von Ricinusöl mit Ketonharzen mit einer OH-Zahl von 110 bis 200 mg KOH/g **A1;** und mindestens ein aliphatisches Triol mit einem mittleren Molekulargewicht von 170-500 g/mol und einer OH-Zahl von 400-1100 mg KOH/g, wobei es sich um Polyetherpolyole basierend auf 1,1,1-Trimethylolpropan handelt **A2**; und
bevorzugt mindestens ein aliphatisches Diol mit einem Molekulargewicht von 90-146 g/mol **A3**; und mindestens ein Polybutadienpolyol mit einer mittleren OH-Funktionalität im Bereich von 2.1 bis 2.9, insbesondere 2.3 bis 2.7, und mit einem mittleren Molekulargewicht im Bereich von 2000 bis 4000 g/mol, insbesondere 2500 bis 3000 g/mol, und einer OH-Zahl von 40 - 100 **A4**; und
mindestens ein hydroxyliertes Tallöl-basiertes Polyesterpolyol **A5**;
umfasst,
und wobei die Polyisocyanatkomponente **K2** mindestens ein aromatisches Polyisocyanat **B1** umfasst.

Das Verhältnis der OH-Gruppen von **(A1+A4+A5)/(A2+A3)** beträgt von 0.25 - 5 und das Verhältnis aller NCO-Gruppen der aromatischen Polyisocyanate B1 : aller OH-Gruppen der Polyolkomponente **K1** beträgt von 0.95 : 1 bis 1.25 : 1.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer polydispersen Mischung von oligomeren oder polymeren Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Als "Offenzeit" wird in diesem Dokument die Zeit bezeichnet, innerhalb welcher die zu verklebenden Teile gefügt sein müssen, nachdem die Komponenten gemischt wurden.

Der Begriff "Festigkeit" bezeichnet im vorliegenden Dokument die Festigkeit des ausgehärteten Klebstoffs, wobei mit Festigkeit insbesondere die Zugfestigkeit und das Elastizitätsmodul (E-Modul), insbesondere im Dehnungsbereich 0.05 bis 0.25%, gemeint sind.

Als "Raumtemperatur" wird im vorliegenden Dokument eine Temperatur von 23°C bezeichnet.

Die Glasübergangstemperatur (nachgehend abgekürzt auch mit Tg), wird im vorliegenden Dokument nach der Methode bestimmt, wie sie im Beispielteil beschrieben ist.

Die Polyolkomponente **K1** umfasst mindestens ein Umsetzungsprodukt von Ricinusöl mit Ketonharzen mit einer OH-Zahl von 110 bis 200 mg KOH/g **A1**.

Bevorzugt ist eine OH-Zahl von 155 bis 190 mg, insbesondere 140 bis 170 mg, insbesondere bevorzugt 150 - 160 mg KOH/g. Weiterhin weist es vorzugsweise ein OH-Equivalentgewicht von 300 bis 400 g/eq auf.

Besonders bevorzugt sind Umsetzungsprodukte von Ricinusöl mit Ketonharzen auf Basis von Cyclohexanon, insbesondere solche, wie sie beispielsweise von Nuplex Resins GmbH, Deutschland unter der Bezeichnung Setathane® 1150 und von BASF, Deutschland unter der Bezeichnung Sovermol® 805 vertrieben werden.

Unter dem Begriff "Ricinusöl" (auch Rizinusöl oder Kastoröl genannt) wird im vorliegenden Dokument insbesondere Ricinusöl verstanden wie es beschreiben ist in CD Römpp Chemie Lexikon, Version 1.0, Thieme Verlag.

Unter dem Begriff "Ketonharz" wird im vorliegenden Dokument insbesondere Ketonharz verstanden wie es beschreiben ist in CD Römpp Chemie Lexikon, Version 1.0, Thieme Verlag.

Die Polyolkomponente **K1** umfasst mindestens ein aliphatisches Triol mit einem mittleren Molekulargewicht von 170-500 g/mol und einer OH-Zahl von 400-1100 mg KOH/g, wobei es sich um Polyetherpolyole basierend auf 1,1,1-Trimethylolpropan handelt **A2**.

Vorzugsweise handelt es sich bei dem aliphatischen Triol **A2** um Polyetherpolyole basierend auf 1,1,1-Trimethylolpropan mit einem mittleren Molekulargewicht von 175-400 g/mol, insbesondere von 175-350 g/mol. Weiter ist es vorteilhaft, wenn das aliphatische Triol **A2** eine OH-Zahl von 500-1000 mg KOH/g, bevorzugt 520-980 mg KOH/g aufweist.

Vorzugsweise handelt es sich bei den Polyetherpolyolen basierend auf 1,1,1-Trimethylolpropan um alkoxyliertes 1,1,1-Trimethylolpropan, insbesondere ethoxyliertes oder propoxyliertes 1,1,1-Trimethylolpropan, am meisten bevorzugt um propoxyliertes 1,1,1-Trimethylolpropan.

Geeignete Polyetherpolyole basierend auf 1,1,1-Trimethylolpropan sind beispielsweise auch kommerziell erhältlich unter dem Handelsnamen Desmophen® 4011 T von Covestro AG, Deutschland oder unter dem Handelsnamen Lupranol® 3903 von BASF, Deutschland.

Die Polyolkomponente **K1** weist bevorzugt mindestens ein aliphatisches Diol mit einem Molekulargewicht von 90-146 g/mol **A3** auf.

Dies führt zu hohen Werten in der Zugfestigkeit bei gleichzeitig hohen Werten der E-module. Weiter ist dies dahingehend von Vorteil, dass dabei besonders hohe Werte für den 2ten hohen Tg, insbesondere über 90°C, erhalten werden. Respektive werden besonders hohe Werte für den Temperaturunterschied zwischen dem ersten und dem zweiten Tg, insbesondere über 150 K, erhalten.

Vorzugsweise ist das mindestens eine aliphatische Diol A3 ausgewählt aus der Liste bestehend aus 1,4 Butandiol, 2-Ethyl-1,3-hexandiol, 3-Methyl-1,5-pentandiol und 1,5-Pentandiol, vorzugsweise ausgewählt aus der Liste bestehend aus 1,4 Butandiol und 1,5-Pentandiol. Bevorzugt handelt es sich um 1,4 Butandiol.

Handelt es sich bei dem aliphatischen Diol **A3** um 1,4 Butandiol ist dies dahingehend von Vorteil, dass dadurch höhere Werte für Zugfestigkeit, E-module und Gelation time sowie ein grösserer Temperaturunterschied zwischen dem ersten und dem zweiten Tg erhalten werden.

Die Polyolkomponente **K1** umfasst mindestens ein Polybutadienpolyol mit einer mittleren OH-Funktionalität im Bereich von 2.1 bis 2.9, insbesondere 2.3 bis 2.7, und mit einem mittleren Molekulargewicht im Bereich von 2000 bis 4000 g/mol, insbesondere 2500 bis 3000 g/mol, und einer OH-Zahl von 40 - 100 **A4**.

Solche Polybutadienpolyole sind insbesondere erhältlich durch die Polymerisation von 1,3-Butadien und Allylalkohol in einem geeigneten Verhältnis oder durch die Oxidation von geeigneten Polybutadienen.

Geeignete Polybutadienpolyole sind insbesondere Polybutadienpolyole, welche Strukturelemente der Formel (I) und gegebenenfalls Strukturelemente der Formeln (II) und (III) enthalten.

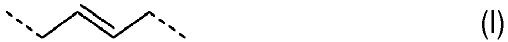

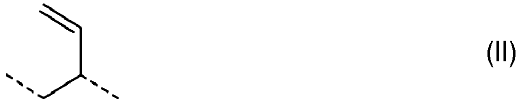

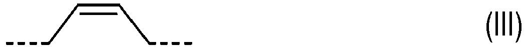

Bevorzugte Polybutadienpolyole enthalten
40 bis 80 %, insbesondere 55 bis 65 % des Strukturelements der Formel (I),
0 bis 30 %, insbesondere 15 bis 25 %, des Strukturelements der Formel (II),
0 bis 30 %, insbesondere 15 bis 25 %, des Strukturelements der Formel (III).

Besonders geeignete Polybutadienpolyole sind beispielweise erhältlich von Cray Valley, USA unter dem Handelsnamen Poly bd^{®} R-45HTLO oder Poly bd^{®} R-45M oder von Evonik, Deutschland unter dem Handelsnamen Polyvest HT.

Die Polyolkomponente **K1** umfasst mindestens ein hydroxyliertes Tallöl-basiertes Polyesterpolyol **A5**. Vorzugsweise handelt es sich um ein hydroxyliertes Tallöl-basiertes Polyesterdiol.

Weiter bevorzugt handelt es sich um ein Polyesterpolyol **A5** mit einer Hydroxylzahl von 30 - 100, insbesondere 60 - 90, besonders bevorzugt 70 - 80.

Bevorzugte hydroxylierte Tallöl-basierte Polyesterdiole werden dadurch hergestellt, dass Tallöl mit einer Dicarbonsäure, respektive deren Anhydrid, und einem Polyol mit mehr als 3 OH-Gruppen umsetzt wird.

Bei der Dicarbonsäure, respektive deren Anhydrid, handelt es sich vorzugsweise um eine aromatische Dicarbonsäure, respektive deren Anhydrid, insbesondere bevorzugt um Phthalsäureanhydrid.

Bei dem Polyol mit mehr als 3 OH-Gruppen handelt es sich vorzugsweise um ein Polyol mit 3- 8 OH-Gruppen, insbesondere 3-4 OH-Gruppen, insbesondere bevorzugt um ein Tetrol. Besonders bevorzugt handelt es sich um Pentaeritryt (auch Pentaerythritol genannt).

Unter dem Begriff "Tallöl" wird im vorliegenden Dokument vorzugsweise eine Zusammensetzung verstanden, wie sie unter dem Begriff "Tallöl" definiert wird im Römpp-Lexikon Chemie, 10te Auflage, Georg Thieme Verlag, 1999.

Vorzugsweise handelt es sich bei dem mindestens einen hydroxylierten Tallöl-basierten Polyesterpolyol **A5** um Zusammensetzungen mit der CAS-Nummer 92128-24-0.

Vorzugsweise haben die hydroxylierten Tallöl-basierten Polyesterpolyole **A5** einen Erweichungspunkte unter 23°C, vorzugsweise unter 0°C, insbesondere unter -50°C. Weiter haben sie vorzugsweise eine Säurezahl von 3-6 mg KOH/g.

Besonders bevorzugt handelt es sich um eine Zusammensetzung der Formel (IV) 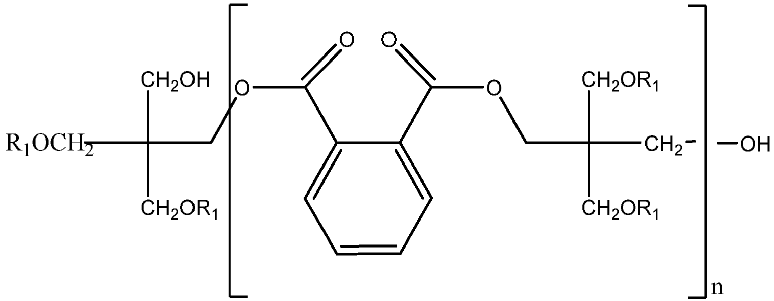 wobei R₁ für Tallöl, insbesondere Fettsäuren des Tallöls und Harzsäuren des Tallöls, und der Index "n" für einen Wert von 1-4 steht.

Besonders geeignete Polyesterpolyole **A5** sind beispielweise erhältlich von Granel S.A., Frankreich unter dem Handelsnamen REAGEM 5006.

Die vorliegende Polyisocyanatkomponente **K2** umfasst mindestens ein aromatisches Polyisocyanat **B1**.

Geeignete aromatische Polyisocyanate **B1** sind insbesondere monomere Di- oder Triisocyanaten, sowie Oligomere, Polymere und Derivate von monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat. Bevorzugte aromatische monomere Di- oder Triisocyanate sind abgeleitet von MDI und/oder TDI, insbesondere von MDI.

Geeignete Oligomere, Polymere und Derivate der genannten monomeren Di- und Triisocyanate sind insbesondere abgeleitet von MDI und TDI. Davon insbesondere geeignet sind kommerziell erhältliche Typen, TDI-Oligomere wie Desmodur^{®} IL (von Bayer); weiterhin geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen darstellen, bekannt unter Handelsnamen wie Desmodur^{®} CD, Desmodur^{®} PF, Desmodur^{®} PC (alle von Bayer), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf, vorzugsweise 2.1 bis 3.0, insbesondere 2.1 bis 2.6.

Bevorzugt sind als aromatische Polyisocyanate **B1** sind monomeres MDI oder Oligomere, Polymere und Derivate abgeleitet von MDI, insbesondere mit einer mittleren NCO-Funktionalität von 2.0 bis 4.0, vorzugsweise 2.0 bis 3.0, insbesondere 2.1 bis 2.6.

Besonders vorteilhaft handelt es sich um Oligomere, Polymere und Derivate abgeleitet von MDI, insbesondere um Polymere abgeleitet von MDI, insbesondere mit einer mittleren NCO-Funktionalität von 2.1 bis 2.6.

Handelt es sich um Oligomere, Polymere und Derivate abgeleitet von MDI mit einer mittleren NCO-Funktionalität von 2.4 bis 2.6 kann es dahingehend von Vorteil sein, dass dadurch besonders hohe Werte für den Temperaturunterschied zwischen dem ersten und dem zweiten Tg erhalten werden. Dies ist beispielsweise im Vergleich von Tabelle 1 mit Tabelle 3 ersichtlich.

Handelt es sich um Oligomere, Polymere und Derivate abgeleitet von MDI mit einer mittleren NCO-Funktionalität von 2.1 bis 2.3 kann es dahingehend von Vorteil sein, dass dadurch besonders hohe Zugfestigkeitswerte und E-modul-Werte erhalten werden. Dies ist beispielsweise im Vergleich von Tabelle 1 mit Tabelle 3 ersichtlich, dort werden ungefähr doppelt so hohe Zugfestigkeitswerte und ungefähr dreimal so hohe E-modul-Werte erhalten.

Insbesondere handelt es sich um Polymere abgeleitet von MDI, insbesondere mit einem Gewichtsanteil von Polymeren abgeleitet von MDI von 20 - 90 Gew.-%, bezogen auf das Gesamtgewicht des aromatischen Polyisocyanats **B1**.

Weiter ist es vorteilhaft, wenn das aromatische Polyisocyanat **B1** ein mittleres Molekulargewicht von 160 - 2000 g/mol, insbesondere 500 - 1500 g/mol aufweist.

Es ist weiter vorteilhaft, wenn die Summe der NCO-Gruppen, welche nicht von **B1** herrühren, ≤5%, insbesondere ≤2%, insbesondere bevorzugt ≤1%, am meisten bevorzugt ≤0.5%, beträgt, bezogen auf die Summe aller NCO -Gruppen der zweikomponentigen Polyurethanzusammensetzung.

Vorzugsweise beträgt der Anteil des aromatischen Polyisocyanats **B1** ≥ 90 Gew.-%, insbesondere ≥ 95 Gew.-%, insbesondere bevorzugt ≥99 Gew.-%, bezogen auf das Gesamtgewicht der Polyisocyanatkomponente **K2.**

Das Verhältnis der OH-Gruppen von **(A1+A4+A5)/(A2+A3)** beträgt von 0.25 - 5. Vorzugsweise beträgt das Verhältnis der OH-Gruppen von **(A1+A4+A5)/(A2+A3)** von 0.3 - 1.4, insbesondere von 0.3 - 1.0, vorzugsweise von 0.3 - 0.8, insbesondere bevorzugt 0.3 - 0.6

Dies führt zu hohen Werten in der Zugfestigkeit bei gleichzeitig hohen Werten der E-module. Weiter ist dies dahingehend von Vorteil, dass dabei besonders hohe Werte für den 2ten Tg, insbesondere über 90°C, erhalten werden. Respektive werden besonders hohe Werte für den Temperaturunterschied zwischen dem ersten und dem zweiten Tg, insbesondere über 150 K, erhalten.

Weiter wurde überraschenderweise gefunden, dass sich die Werte für die mechanischen Eigenschaften bei der Härtung für 7 Tage bei Raumtemperatur gegenüber der Härtung für 3 h bei 80°C kaum unterscheiden.

Bei Verhältnissen von **(A1+A4+A5)/(A2+A3)** kleiner 0.25 ist insbesondere die Offenzeit zu kurz. So beträgt beispielsweise die Gelation time im Beispiel **E33** trotz einer geringen Menge an Katalysator bereits nur noch 2 min.

Bei Verhältnissen grösser als 5 werden Polyurethanzusammensetzungen mit zu tiefen Werten für Zugfestigkeit und für die E-module erhalten.

Vorzugsweise beträgt das Verhältnis der OH-Gruppen von **(A1+A2+A4+A5)/(A3)** von 0.4 -5, insbesondere von 0.4 - 3, vorzugsweise von 0.4 - 2, insbesondere bevorzugt 0.45 - 1.25.

Dies führt zu hohen Werten in der Zugfestigkeit bei gleichzeitig hohen Werten der E-module. Weiter ist dies dahingehend von Vorteil, dass dabei besonders hohe Werte für den 2ten Tg, insbesondere über 90°C, erhalten werden. Respektive werden besonders hohe Werte für den Temperaturunterschied zwischen dem ersten und dem zweiten Tg, insbesondere über 150 K, erhalten.

Weiter wurde überraschenderweise gefunden, dass sich die Werte für die mechanischen Eigenschaften bei der Härtung 7 Tage bei Raumtemperatur gegenüber der Härtung für 3 h bei 80°C kaum unterscheiden.

Handelt es sich bei dem aliphatischen Diol **A3** um 1,4 Butandiol und bei dem aromatischen Polyisocyanat **B1** um sich um Oligomere, Polymere und Derivate abgeleitet von MDI abgeleitet von MDI mit einer mittleren NCO-Funktionalität von 2.4 bis 2.6, so kann es vorteilhaft sein, wenn das Verhältnis der OH-Gruppen von **(A1+A4+A5)/(A2+A3)** von 0.3 - 1, insbesondere von 0.4 - 0.7, vorzugsweise von 0.4 - 0.6, beträgt.

Dies führt zu hohen Werten in der Zugfestigkeit bei gleichzeitig hohen Werten der E-module. Weiter ist dies dahingehend von Vorteil, dass besonders hohe Werte für den Temperaturunterschied zwischen dem ersten und dem zweiten Tg, insbesondere über 150 K, erhalten werden.

Weiter kann es vorteilhaft sein, wenn zusätzlich das das Verhältnis der OH-Gruppen von **(A1+A2+A4+A5)/(A3)** von 0.45 - 2, insbesondere von 0.6 - 1.25, beträgt. Dies ist beispielsweise in Tabelle 1 ersichtlich.

Handelt es sich bei dem aliphatischen Diol **A3** um 1,4 Butandiol und bei dem aromatischen Polyisocyanat **B1** um sich um Oligomere, Polymere und Derivate abgeleitet von MDI abgeleitet von MDI mit einer mittleren NCO-Funktionalität von 2.1 bis 2.3, so kann es vorteilhaft sein, wenn das Verhältnis der OH-Gruppen von **(A1+A4+A5)/(A2+A3)** von 0.25 - 4.6 beträgt.

Dies führt zu hohen Werten in der Zugfestigkeit bei gleichzeitig hohen Werten der E-module und ausreichend langer Gelation time. Weiter ist dies dahingehend von Vorteil, dass besonders hohe Werte für den Temperaturunterschied zwischen dem ersten und dem zweiten Tg, insbesondere über 150 K, erhalten werden.

Weiter kann es vorteilhaft sein, wenn zusätzlich das das Verhältnis der OH-Gruppen von **(A1+A2+A4+A5)/(A3)** von 0.4- 1.5, insbesondere von 0.45- 0.9, bevorzugt von 0.45-0.7, beträgt. Dies ist beispielsweise in Tabelle 3 ersichtlich.

Vorzugsweise beträgt das Verhältnis der OH-Gruppen von **(A1+A5)/(A4)** von 2 - 15, insbesondere von 3 - 10, bevorzugt von 4 - 8.

Dies führt zu hohen Werten in der Zugfestigkeit bei gleichzeitig hohen Werten der E-module und hohen Werte für den Temperaturunterschied zwischen dem ersten und dem zweiten Tg. Dies ist beispielsweise aus dem Vergleich zwischen den beiden Referenzbeispielen R5 und R6 ersichtlich.

Beträgt das Verhältnis unter 2 ist es dahingehend von Nachteil, dass dadurch tiefe Werte der Zugfestigkeit und des E-moduls erhalten werden.
Beträgt das Verhältnis über 15 führt dies zu einem geringen Temperaturunterschied zwischen dem ersten und dem zweiten Tg, insbesondere zu dem Verlust von zwei unterschiedlichen Tg-Werten und somit zu einem sogenannten Misch-Tg.

Das Verhältnis aller NCO-Gruppen der aromatischen Polyisocyanate B1 : aller OH-Gruppen der Polyolkomponente **K1** beträgt 0,95 : 1 - 1.25 : 1. Unter dem vorgehend beschriebenen Verhältnis wird das molare Verhältnis erwähnter Gruppen verstanden. Vorzugsweise beträgt das Verhältnis aller NCO-Gruppen der aromatischen Polyisocyanate B1 : aller OH-Gruppen der Summe von (**A1+A2+A3+A4+A5**) = 0.95 : 1 - 1.25 : 1, insbesondere 1.05 : 1 - 1.15 : 1.

Bei der zweikomponentigen Polyurethanzusammensetzung beträgt die Summe aller OH-Gruppen von **(A1+A2+A3+A4+A5)** vorzugsweise ≥90% der Summe aller OH-Gruppen der zweikomponentigen Polyurethanzusammensetzung.

Vorzugsweise beträgt bei der zweikomponentigen Polyurethanzusammensetzung die Summe aller OH-Gruppen von (**A1+A2+A3+A4+A5**) ≥95%, insbesondere ≥98%, insbesondere bevorzugt ≥99%, am meisten bevorzugt ≥99,5%, der Summe aller OH-Gruppen der zweikomponentigen Polyurethanzusammensetzung. Dies ist hohen Werten für die Zugfestigkeit und das E-modul zuträglich.

Vorzugsweise ist die zweikomponentige Polyurethanzusammensetzung im Wesentlichen frei von OH-Gruppen, welche nicht von **(A1+A2+A3+A4+A5)** herrühren. Unter dem Begriff "im Wesentlichen frei" wird in diesem Fall verstanden, dass die Summe der OH-Gruppen, welche nicht von **(A1+A2+A3+A4+A5)** herrühren, ≤5%, insbesondere ≤2%, insbesondere bevorzugt ≤1%, am meisten bevorzugt ≤0.5%, beträgt, bezogen auf die Summe aller OH-Gruppen der zweikomponentigen Polyurethanzusammensetzung. Dies ist hohen Werten für die Zugfestigkeit und das E-modul zuträglich.

Vorzugsweise ist die zweikomponentige Polyurethanzusammensetzung im Wesentlichen frei von OH-Gruppen der folgenden Stoffe:
- 1,2,3-Propantriol und/oder 1,1,1-Trimethylolpropan.
- Polyetherpolyolen, insbesondere Polyoxyalkylenpolyole, mit einem mittleren Molekulargewicht von 500 bis 6000 g/mol

Weiterhin kann die zweikomponentige Polyurethanzusammensetzung Katalysatoren enthalten, die die Reaktion von Hydroxylgruppen mit Isocyanatgruppen beschleunigen, insbesondere Zinn-, Zink-, Zirkonium- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Diazabicyclo[5.4.0]undec-7-en (DBU). Zur Erzielung einer Wärmeaktivierung können insbesondere die tertiären Amine, Amidine oder Guanidine mit Phenol oder Carbonsäuren, insbesondere phenolischen oder sonstigen aromatischen Carbonsäuren, reversibel ein Salz oder einen Komplex bilden, welches bei Erhöhung der Temperatur zersetzt wird.

Die zweikomponentige Polyurethanzusammensetzung kann neben den bereits erwähnten weitere Bestandteile, wie sie der Fachmann aus der zweikomponenten-Polyurethanchemie her kennt, enthalten. Diese können in nur einer Komponente oder in beiden vorhanden sein.

Als weitere Bestandteile bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-AluminiumSilikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metallpulver wie Aluminium, Kupfer, Eisen, Silber oder Stahl, PVC-Pulver oder Hohlkugeln.

Es kann vorteilhaft sein, wenn die Polyurethanzusammensetzung mindestens einen Füllstoff ausgewählt aus der Gruppe bestehend aus Calciumcarbonat, Kaolin, Baryt, Talk, Quarzmehl, Dolomit, Wollastonit, Kaolin, calciniertes Kaolin und Mica enthält.

Als weitere Bestandteile können weiterhin insbesondere Lösungsmittel, Weichmacher und/oder Extender, Pigmente, Rheologiemodifizierer wie insbesondere amorphe hydrophobe Kieselsäuren, Trocknungsmittel wie insbesondere Zeolithe, Haftvermittler wie insbesondere Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein.

Die Komponenten **K1** und **K2** werden vorteilhaft derart formuliert, dass das Volumenverhältnis von Komponente **K1** und **K2** zwischen 1:3 und 3:1, insbesondere zwischen 1:2 und 2:1, beträgt. Besonders bevorzugt beträgt dieses Verhältnis in etwa 1:1.

Eine bevorzugte zweikomponentige Polyurethanzusammensetzung besteht: aus einer Polyolkomponente **K1**, welche:
- 30 bis 70 Gewichts-%, bevorzugt 40 bis 60 Gewichts-%, insbesondere 45 bis 55 Gewichts-%, der Summe (**A1**+**A2**+**A3**+**A4**+**A5**); und
- 20 bis 60 Gewichts-%, bevorzugt 30 bis 50 Gewichts-%, insbesondere 35 bis 45 Gewichts-%, Füllstoffe, insbesondere Füllstoffe ausgewählt aus der Gruppe bestehend aus Calciumcarbonat, Kaolin, Baryt, Talk, Quarzmehl, Dolomit, Wollastonit, Kaolin, calciniertes Kaolin, und Mica, besonders bevorzugt Calciumcarbonat und Rheologiemodifizierer wie insbesondere hydrophobe amorphe Kieselsäuren; und
- 0 bis 5 Gewichts-%, bevorzugt 1 bis 4 Gewichts-%, insbesondere bevorzugt 2 bis 4 Gewichts-%, Katalysatoren für die Beschleunigung der Reaktion von Hydroxylgruppen mit Isocyanatgruppen;
- 0 bis 5 Gewichts-%, bevorzugt 0.5 bis 3 Gewichts-%, insbesondere bevorzugt 1 bis 2 Gewichts-%, Trocknungsmittel (insbesondere Zeolithe);
- bezogen auf das Gesamtgewicht der Polyolkomponente K1, enthält, insbesondere daraus besteht, und aus einer Polyisocyanatkomponente **K2**, welche:
- einen Anteil des aromatischen Polyisocyanats **B1** ≥ 90 Gew.-%, insbesondere ≥ 95 Gew.-%, insbesondere bevorzugt ≥ 99 Gew.-%, bezogen auf das Gesamtgewicht der Polyisocyanatkomponente **K2**, aufweist.

Die Herstellung der beiden Komponenten erfolgt getrennt voneinander und, zumindest für die zweite Komponente, vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils die erste Komponente beziehungsweise die zweite Komponente der Zusammensetzung enthält.

Das Mischen erfolgt typischerweise über Statikmischer oder mit Hilfe von dynamischen Mischern. Beim Mischen ist darauf zu achten, dass die beiden Komponenten möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente mit Isocyanatgruppen der zweiten Komponente beginnt die Aushärtung durch chemische Reaktion. Dabei reagieren die vorhandenen Hydroxylgruppen und gegebenenfalls vorhandene weitere gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet die Polyurethanzusammensetzung zu einem festen Material aus. Dieser Vorgang wird auch als Vernetzung bezeichnet.

Ein weiterer Gegenstand der Erfindung ist somit auch eine ausgehärtete Polyurethanzusammensetzung, erhalten aus der Aushärtung der Polyurethanzusammensetzung wie im vorliegenden Dokument beschrieben.

Die beschriebene zweikomponentige Polyurethanzusammensetzung ist vorteilhaft verwendbar als struktureller Klebstoff

Die Erfindung betrifft somit auch ein Verfahren zum Verkleben von einem ersten Substrat mit einem zweiten Substrat, welches die Schritte umfasst:
- Mischen der vorgängig beschriebenen Polyolkomponente **K1** und Polyisocyanatkomponente **K2**,
- Applizieren der vermischten Polyurethanzusammensetzung auf mindestens eine der zu verklebenden Substratoberflächen,
- Fügen der zu verklebenden Substrate innerhalb der Offenzeit,
- Aushärten der Polyurethanzusammensetzung.

Dabei können die beiden Substrate aus dem gleichen oder unterschiedlichen Materialien bestehen.

In diesen Verfahren zum sind geeignete Substrate insbesondere
- Glas, Glaskeramik, Glasmineralfasermatten;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites, sowie
- Beton, Mörtel, Ziegel, Gips und Natursteine wie Granit, Kalk- und Standstein oder Marmor.

In diesen Verfahren ist eines oder beide Substrate bevorzugt ein Metall oder eine Glaskeramik oder ein Glas oder ein glasfaserverstärkter Kunststoff oder ein kohlefaserverstärkter Kunststoff oder ein Thermoset auf Epoxybasis.

Die Substrate können bei Bedarf vor dem Applizieren der Zusammensetzung vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Aus dem beschriebenen Verfahren zum Verkleben entsteht ein Artikel, bei welchem die Zusammensetzung zwei Substrate miteinander verbindet.

Dieser Artikel ist insbesondere ein Sandwichelement einer Leichtbaustruktur, ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Schienenfahrzeug oder ein Schiff, sowie ein Flugzeug oder ein Helikopter; oder ein Anbauteil eines solchen Artikels.

Die beschriebene zweikomponentige Polyurethanzusammensetzung zeichnet sich unter anderem dadurch aus, dass sie eine schwach ausgeprägte Abhängigkeit der mechanischen Eigenschaften, insbesondere der Zugfestigkeit und der E-moduli, von der Temperatur aufweist. Aufgrund dieser Eigenschaften ist sie ganz besonders geeignet als struktureller Klebstoff für Verklebungen, welche unter Umgebungstemperaturen im Freien beansprucht werden.

Ein weiterer Gegenstand der Erfindung ist somit auch die Verwendung der beschriebenen Polyurethanzusammensetzung als struktureller Klebstoff zum Verkleben von zwei Substraten.

Überraschenderweise wurde gefunden, dass die erfindungsgemässen Zusammensetzungen besonders beständig gegenüber Schäumen durch die Reaktion von Isocyanat mit in der Polyolkomponente K1 verbleibenden Restfeuchtigkeit ist. Daher kann auf eine Trocknung, typischerweise durch Vakuum, der Polyolkomponente K1 verzichtet werden, was verfahrenstechnisch ein grosser Vorteil ist. Es kann daher vorteilhaft sein, wenn an die Polyolkomponente **K1** weniger als 1 Tag, vorzugsweise weniger als 5 h, vor dem Vermischen kein Vakuum angelegt wird, insbesondere von weniger als 200 mbar, insbesondere weniger als 100 mbar, insbesondere weniger als 50 mbar, bevorzugt 20 - 5 mbar, für mehr als 10 min, insbesondere mehr als 30 min, vorzugsweise von 30 - 120 min.

Überraschenderweise wurde gefunden, dass die erfindungsgemässen Zusammensetzungen besonders beständig gegenüber Schäumen durch eine Reaktion der Isocyanatgruppen mit verbleibender Restfeuchtigkeit auf dem Substrat ist. Daher kann bei der Verwendung der erfindungsgemässen Zusammensetzungen auf eine Trocknung des Substrats, insbesondere durch Erwärmen und/oder Vakuum, verzichtet werden, was ein grosser verfahrenstechnischer Vorteil ist.

Es kann weiter vorteilhaft sein, wenn die Substrate weniger als 24 h, vorzugsweise weniger als 12 h, insbesondere weniger als 6 h, vor dem Applizieren der vermischten Polyurethanzusammensetzung auf das Substrat, nicht getrocknet werden, insbesondere nicht getrocknet werden durch Anlegen von Vakuum, insbesondere von weniger als 100 mbar, insbesondere weniger als 50 mbar, bevorzugt 20 - 1 mbar für mehr als 60 min, insbesondere mehr als 120 min, vorzugsweise von 1 - 12 h, insbesondere bevorzugt 2 - 8 h, und/oder Erwärmen für mehr als 60 min, vorzugsweise mehr als 120 min, insbesondere bevorzugt für 1 - 12 h, insbesondere bevorzugt 2 - 8 h, auf eine Temperatur über 50°C, insbesondere über 55°C, besonders bevorzugt auf eine Temperatur von 60 - 80°C.

Im Fall von Zusammensetzungen des Stands der Technik kann es für eine Verbesserung der Eigenschaften der vernetzten Zusammensetzungen auch vorteilhaft sein, nach der Aushärtung der Zusammensetzung die verklebten Substrate einem Temperprozess zu unterziehen. Damit kann bei erfolgter Vernetzung die mechanische Stabilität der ausgehärteten Zusammensetzungen bei thermischer Belastung verbessert werden.

Überraschenderweise wurde gefunden, dass bei den erfindungsgemässen Zusammensetzungen solche Temperprozesse zum Erreichen guter mechanischer Eigenschaften nicht nötig sind (die Werte für 3 h bei 80°C sind mit den Werten für 7 d bei RT vergleichbar. Das Weglassen von Zeit- und Energie-intensiven Temperprozessen ist verfahrenstechnisch ein grosser Vorteil.

.Es kann weiter vorteilhaft sein, wenn die verklebten Substrate nach der Aushärtung nicht einem Temperprozess unterworfen wird, insbesondere nicht für einen Zeitraum zwischen 30 min - 24 Stunden auf eine erhöhte Temperatur zwischen 40 bis 90°C gebracht werden.

Ein weiterer Gegenstand der Erfindung ist auch ein verklebter Artikel erhalten aus dem erfindungsgemässen Verfahren.

Wird die zweikomponentige Polyurethanzusammensetzung als Klebstoff eingesetzt, weist die ausgehärtete Zusammensetzung vorzugsweise folgende Eigenschaften auf (gemäss den nachfolgend im Beispielteil verwendeten Messverfahren/Messbedingungen, Aushärtungsbedingungen 3h bei 80°C):

| | |
|---|---|
| TS [MPa] | 7.3- 23 |
| E-modul 0.05-0.25% [MPa] | 74 - 745 |
| E-modul 0.5-5% [MPa] | 54 - 392 |
| 1.Tg (°C) | -60 bis -58 |
| 2.Tg (°C) | 60 - 127 |

Aus Tabelle 5 wird ersichtlich, dass Polyurethanzusammensetzungen, welche kein A5 enthalten, tiefe Werte des E-moduls aufweisen. Weiter weisen sie einen geringen Temperaturunterschied zwischen dem ersten und dem zweiten Tg auf. Dies ist insbesondere aus Vergleichsbeispiel R1 ersichtlich.

Aus Tabelle 5 wird weiter ersichtlich, dass Polyurethanzusammensetzungen, welche kein A1 enthalten, tiefe Werte der Zugfestigkeit und des E-moduls aufweisen. Weiter weisen sie einen geringen Temperaturunterschied zwischen dem ersten und dem zweiten Tg auf. Dies ist insbesondere aus Vergleichsbeispiel R4 ersichtlich.

Aus Tabelle 5 wird auch ersichtlich, dass Polyurethanzusammensetzungen, welche kein A4 enthalten, einen geringen Temperaturunterschied zwischen dem ersten und dem zweiten Tg aufweisen. Insbesondere führt dies zu dem Verlust von zwei unterschiedlichen Tg-Werten und somit zu einem sogenannten Misch-Tg.

Dies ist insbesondere dahingehend von Nachteil, dass diese Polyurethanzusammensetzungen keine Temperaturunabhängigkeit der mechanischen Eigenschaften, insbesondere zwischen -60°C und 50°C, aufweisen. Die Zusammensetzungen ohne A4 weisen einen einzigen Misch-Tg bei ca. 60°C auf, was dazu führt, dass die mechanischen Eigenschaften oberhalb und unterhalb des breiten Misch-Tgs signifikant unterschiedlich sind. Dies ist insbesondere für eine Verwendung bei Anwendungen nachteilig, welche ein Anwendungsbereich von zwischen - 60°C und 100°C aufweisen. Dies ist insbesondere aus dem Vergleich der beiden Vergleichsbeispiele R5 und R6 ersichtlich.

### Beispiele

**verwendete Substanzen:**

| | |
|---|---|
| Setathane 1150 | Umsetzungsprodukt von Rizinusöl mit Ketonharz, Setathane® 1150, OH-Zahl von 155 mg KOH/g, OH-Equivalenzgewicht von ca. 360 g/eq, Nuplex Resins GmbH, Deutschland |
| Desmophen T 4011 | propoxyliertes 1,1,1-Trimethylolpropan, Desmophen® 4011 T, OH-Zahl von 550 ± 25 mg KOH/g, mittleres Molekulargewicht von ca. 300±20 g/mol, Covestro AG, Deutschland |
| Polybd 45 HTLO | Polybutadienpolyol mit primären OH-Gruppen, OH-Funktionalität 2.4-2.6, mittleres Molekulargewicht ca. 2800 g/mol, OH-Zahl 47 mg KOH/g (Poly bd^{®} R-45HTLO von Total Cray Valley, USA) |
| REAGEM 5006 | REAGEM 5006, OH-Zahl von 75 mg KOH/g, CAS-Nummer 92128-24-0, Granel S.A, Frankreich. |
| Zr-Katalysator | Zirkonium-Chelat-Komplex, Zr-Gehalt 3.5 Gewichts-% (K-Kat^{®} A-209 von King Industries Inc., USA) |
| Sylosiv | Zeolith (Sylosiv® A3 von W. R. Grace & Co., USA) |
| Desmodur VL | Polymeres MDI, mittlere NCO-Funktionalität von 2.5, Desmodur® VL, Covestro AG, Deutschland |
| Isonate M 143 | Modifiziertes Diphenylmethandiisocyanat enthaltend MDI-Carbodiimid-Addukte, mittlere NCO-Funktionalität von 2.2, NCO-Gehalt 29.4 Gewichts-%, Isonate® M 143 von Dow |
| Desmodur 44MC | Monomeres MDI, mittlere NCO-Funktionalität von 2.0, Desmodur® VL, Covestro AG, Deutschland |

### Herstellung von Polyurethanzusammensetzungen

Für jede Zusammensetzung wurden die in den Tabellen 1 bis 5 angegebenen Inhaltsstoffe in den angegebenen Mengen (in Gewichtsteilen) der Polyolkomponente **K1** mittels eines Vakuumdissolvers unter Feuchtigkeitsausschluss zu einer homogenen Paste verarbeitet und aufbewahrt. Ebenso wurden die in den Tabellen 1 bis 5 angegebenen Inhaltsstoffe der Polyisocyanatkomponente **K2** verarbeitet und aufbewahrt. Anschliessend wurden die beiden Komponenten mittels eines SpeedMixers^{®} (DAC 150 FV, Hauschild) während 30 Sekunden zu einer homogenen Paste verarbeitet und diese unverzüglich folgendermassen geprüft:
Zur Bestimmung der mechanischen Eigenschaften wurde der Klebstoff in Hantelform gemäss ISO 527, Teil 2, 1B, gebracht und während 7 Tagen im Normklima (23°C, 50% relative Feuchtigkeit) oder nach Lagerung im Normklima für 12-24 h während 3h bei 80°C gelagert bzw. ausgehärtet. Danach wurde bei Raumtemperatur das Elastizitätsmodul im Bereich von 0.05 bis 0.2 % Dehnung (" **E-Modul",** "Em 0.05-0.25%"), das Elastizitätsmodul im Bereich von 0.5 bis 5% Dehnung (" **E-Modul**", "Em 0.5-5%"), die **Zugfestigkeit** (tensile strength, "TS") und die **Bruchdehnung** (elongation at break, "EB") der so hergestellten Probekörper gemäss ISO 527 auf einer Zwick Z020 Zugprüfmaschine bei einer Prüfgeschwindigkeit von 10 mm/ min gemessen.

Die **Glasübergangstemperatur,** in den Tabellen abgekürzt mit **T_{g}**, wurde bestimmt anhand von DMTA-Messungen an streifenförmigen Proben (Höhe 2-3 mm, Breite 2-3 mm, Länge 8.5 mm), welche während 12-24 h bei 23°C und anschließend während 3h bei 80°C gelagert bzw. ausgehärtet wurden, mit einem Mettler DMA/SDTA 861 e Gerät. Die Messbedingungen waren: Messung im Zugmodus, 10 Hz Anregungsfrequenz und Aufheizrate 5 K/min. Die Proben wurden auf -70°C abgekühlt und unter Bestimmung des komplexen Elastizitatsmoduls **E*** [MPa] auf 200°C erwärmt, wobei ein Maximum in der Kurve für den Verlustwinkel "tan δ" als Tg-Wert abgelesen wurde.

Die Resultate sind in den Tabellen 1 bis 5 angegeben.

**Tabelle 1**

| | OHZ | E1 | E2 | E3 | E4 | E5 | E6 | E7 | E8 | E9 | E10 | E11 | E12 | E13 |
|---|---|---|---|---|---|---|---|---|---|---|---|---|---|---|
| Polyolkomp. **K1** | | | | | | | | | | | | | | |
| Reagem 5006 (A5) | 75 | 30 | 30 | 30 | 30 | 30 | 30 | 30 | 30 | 30 | 30 | 30 | 30 | 30 |
| Setathane 1150 (A1) | 155 | 34 | 32 | 44 | 42 | 31 | 30 | 29 | 28 | 28 | 27 | 26 | 25 | 24 |
| Polybutadien 45 HTLO (A4) | 48 | 30 | 30 | 20 | 20 | 30 | 30 | 30 | 30 | 28 | 27 | 26 | 25 | 24 |
| Desmophen T 4011 (A2) | 550 | 4 | 4 | 4 | 4 | 4 | 4 | 4 | 4 | 4 | 4 | 4 | 4 | 4 |
| 1,4-Butandiol (A3) | 1245 | 0 | 2 | 0 | 2 | 3 | 4 | 5 | 6 | 8 | 10 | 12 | 14 | 16 |
| Katalysator | | 0.1 | 0.1 | 0.1 | 0.1 | 0.1 | 0.1 | 0.1 | 0.1 | 0.06 | 0.06 | 0.06 | 0.06 | 0.06 |
| Sylosiv | | 2 | 2 | 2 | 2 | 2 | 2 | 2 | 2 | 2 | 2 | 2 | 2 | 2 |

| Polyisocyanatkomp. **K2** | | | | | | | | | | | | | | |
|---|---|---|---|---|---|---|---|---|---|---|---|---|---|---|
| Desmodur VL | | 100 | 100 | 100 | 100 | 100 | 100 | 100 | 100 | 100 | 100 | 100 | 100 | 100 |
| Mixing ratio | | 27.9 | 33.4 | 30.6 | 36 | 36.2 | 38.8 | 41.6 | 44.2 | 50.4 | 56 | 61.8 | 67.4 | 73.2 |
| NCO/OH-ratio | | 1.1 | 1.1 | 1.1 | 1.1 | 1.1 | 1.1 | 1.1 | 1.1 | 1.1 | 1.1 | 1.1 | 1.1 | 1.1 |
| (A1+A4+A5)/(A2+A3) | | 4.07 | 1.84 | 4.56 | 2.07 | 1.43 | 1.16 | 0.97 | 0.83 | 0.65 | 0.53 | 0.44 | 0.37 | 0.32 |
| (A1+A2+A4+A5)/(A3) | | - | 4.36 | - | 4.79 | 2.86 | 2.12 | 1.67 | 1.37 | 1.02 | 0.80 | 0.65 | 0.55 | 0.47 |
| (A1+A5)/(A4) | | 5.2 | 5.0 | 9.4 | 9.1 | 4.9 | 4.8 | 4.7 | 4.6 | 4.9 | 5.0 | 5.0 | 5.1 | 5.2 |
| Gelation Time [min] | | 53 | 14 | 47 | 16 | 12 | 10 | 7 | 8 | 9 | 7 | 7 | 8 | 6 |

| **3h at 80**°C | | | | | | | | | | | | | | |
|---|---|---|---|---|---|---|---|---|---|---|---|---|---|---|
| TS [MPa] | | 9.7 | 12.4 | 12 | 13.7 | 10.6 | 12.7 | 13.9 | 13.2 | 14.1 | 14.7 | 12.9 | 12.1 | 11.8 |
| EB [%] | | 119 | 76 | 85 | 68 | 94 | 92 | 91 | 81 | 71 | 60 | 43 | 32 | 21 |
| Em0.05-0.25%[MPa] | | 98 | 283 | 223 | 395 | 204 | 225 | 253 | 231 | 304 | 272 | 192 | 180 | 278 |
| Em 0.5-5%[MPa] | | 58 | 174 | 133 | 240 | 91 | 115 | 129 | 130 | 162 | 151 | 105 | 99 | 155 |
| 1.Tg (°C) | | -60 | -60 | -60 | -60 | -60 | -60 | -60 | -60 | -60 | -60 | -60 | -60 | -60 |
| 2.Tg (°C) | | 60 | 78 | 67 | 76 | 76 | 84 | 92 | 102 | 108 | 118 | 120 | 125 | 127 |

| **7d RT** | | | | | | | | | | | | | | |
|---|---|---|---|---|---|---|---|---|---|---|---|---|---|---|
| TS [MPa] | | | | | | | | | 13.6 | 13.6 | 14.1 | 11.8 | 10.4 | 10.7 |
| EB [%] | | | | | | | | | 92 | 70 | 61 | 43 | 31 | 22 |
| Em0.05-0.25%[MPa] | | | | | | | | | 218 | 225 | 255 | 190 | 165 | 246 |
| Em 0.5-5%[MPa] | | | | | | | | | 114 | 130 | 145 | 112 | 102 | 133 |

**Tabelle 2**

| | OHZ | E1 | E14 | E15 | E16 | E17 | E18 | E19 | E20 | E21 | E22 | E23 |
|---|---|---|---|---|---|---|---|---|---|---|---|---|
| Polyolkomp. **K1** | | | | | | | | | | | | |
| Reagem 5006 (A5) | 75 | 30 | 30 | 30 | 30 | 30 | 30 | 30 | 30 | 30 | 30 | 30 |
| Setathane 1150 (A1) | 155 | 34 | 32 | 31 | 30 | 29 | 28 | 28 | 27 | 26 | 25 | 24 |
| Polybutadien 45 HTLO (A4) | 48 | 30 | 30 | 30 | 30 | 30 | 30 | 28 | 27 | 26 | 25 | 24 |
| Desmophen T 4011 (A2) | 550 | 4 | 4 | 4 | 4 | 4 | 4 | 4 | 4 | 4 | 4 | 4 |
| 1,5-Pentandiol (A3) | 1077 | | 2 | 3 | 4 | 5 | 6 | 8 | 10 | 12 | 14 | 16 |
| Katalysator | | 0.1 | 0.1 | 0.1 | 0.1 | 0.1 | 0.1 | 0.06 | 0.06 | 0.06 | 0.06 | 0.06 |
| Sylosiv | | 2 | 2 | 2 | 2 | 2 | 2 | 2 | 2 | 2 | 2 | 2 |

| Polyisocyanatkomp. **K2** | | | | | | | | | | | | |
|---|---|---|---|---|---|---|---|---|---|---|---|---|
| Desmodur VL | | 100 | 100 | 100 | 100 | 100 | 100 | 100 | 100 | 100 | 100 | 100 |
| Mixing ratio | | 27.9 | 32.6 | 34.8 | 37.2 | 39.4 | 41.8 | 47 | 51.8 | 56.8 | 61.6 | 66.4 |
| NCO/OH-ratio | | 1.1 | 1.1 | 1.1 | 1.1 | 1.1 | 1.1 | 1.1 | 1.1 | 1.1 | 1.1 | 1.1 |
| (A1+A4+A5)/(A2+A3) | | 4.07 | 1.99 | 1.56 | 1.28 | 1.08 | 0.93 | 0.73 | 0.60 | 0.50 | 0.42 | 0.37 |
| (A1+A2+A4+A5)/(A3) | | - | 5.04 | 3.31 | 2.45 | 1.93 | 1.58 | 1.18 | 0.92 | 0.75 | 0.63 | 0.54 |
| (A1+A5)/(A4) | | 5.2 | 5.0 | 4.9 | 4.8 | 4.7 | 4.6 | 4.9 | 5.0 | 5.0 | 5.1 | 5.2 |
| Gelation Time [min] | | 53 | 17 | 15 | 11 | 7 | 8 | 8 | 7 | 6 | 6 | 6 |

| **3h at 80**°C | | | | | | | | | | | | |
|---|---|---|---|---|---|---|---|---|---|---|---|---|
| TS [MPa] | | 9.7 | 9.6 | 11 | 12.2 | 12.8 | 12.9 | 13.1 | 11.5 | 9.6 | 7.5 | 7.3 |
| EB [%] | | 119 | 120 | 110 | 99 | 91 | 91 | 79 | 39 | 31 | 30 | 27 |
| Em0.05-0.25%[MPa] | | 98 | 125 | 153 | 221 | 251 | 258 | 329 | 332 | 217 | 74 | 87 |
| Em 0.5-5%[MPa] | | 58 | 48 | 81 | 106 | 123 | 127 | 161 | 183 | 121 | 47 | 54 |
| 1.Tg (°C) | | -60 | -60 | -60 | -60 | -60 | -60 | -60 | -60 | -60 | -60 | -60 |
| 2.Tg (°C) | | 60 | 67 | 73 | 78 | 87 | 93 | 103 | 108 | 113 | 116 | 115 |

| **7d RT** | | | | | | | | | | | | |
|---|---|---|---|---|---|---|---|---|---|---|---|---|
| TS [MPa] | | | | | | | 11.9 | 13 | 10.7 | 7.3 | 6.4 | 7.2 |
| EB [%] | | | | | | | 92 | 70 | 20 | 20 | 29 | 25 |
| Em0.05-0.25%[MPa] | | | | | | | 262 | 358 | 354 | 197 | 51 | 118 |
| Em 0.5-5%[MPa] | | | | | | | 125 | 180 | 189 | 108 | 33 | 70 |

**Tabelle 3**

| | OHZ | E24 | E25 | E26 | E27 | E28 | E29 | E30 | E31 | E32 | E33 |
|---|---|---|---|---|---|---|---|---|---|---|---|
| Polyolkomp. **K1** | | | | | | | | | | | |
| Reagem 5006 (A5) | 75 | 30 | 30 | 30 | 30 | 30 | 30 | 30 | 30 | 30 | 30 |
| Setathane 1150 (A1) | 155 | 34 | 32 | 30 | 28 | 28 | 27 | 26 | 25 | 24 | 23 |
| Polybutadien 45 HTLO (A4) | 48 | 30 | 30 | 30 | 30 | 28 | 27 | 26 | 25 | 24 | 23 |
| Desmophen T 4011 (A2) | 550 | 4 | 4 | 4 | 4 | 4 | 4 | 4 | 4 | 4 | 4 |
| 1,4-Butandiol (A3) | 1245 | 0 | 2 | 4 | 6 | 8 | 10 | 12 | 14 | 16 | 18 |
| Katalysator | | 0.1 | 0.1 | 0.1 | 0.1 | 0.06 | 0.06 | 0.06 | 0.06 | 0.06 | 0.06 |
| Sylosiv | | 2 | 2 | 2 | 2 | 2 | 2 | 2 | 2 | 2 | 2 |
| Polyisocyanatkomp. **K2** | | | | | | | | | | | |
| Isonate M143 | | 100 | 100 | 100 | 100 | 100 | 100 | 100 | 100 | 100 | 100 |
| Mixing ratio | | 33.4 | 36.3 | 42.3 | 48.2 | 54.7 | 60.9 | 67.2 | 73.4 | 79.6 | 85.2 |
| NCO/OH-ratio | | 1.1 | 1.1 | 1.1 | 1.1 | 1.1 | 1.1 | 1.1 | 1.1 | 1.1 | 1.1 |
| (A1+A4+A5)/(A2+A3) | | 4.07 | 1.84 | 1.16 | 0.83 | 0.65 | 0.53 | 0.44 | 0.37 | 0.32 | 0.28 |
| (A1+A2+A4+A5)/(A3) | | - | 4.36 | 2.12 | 1.37 | 1.02 | 0.80 | 0.65 | 0.55 | 0.47 | 0.41 |
| (A1+A5)/(A4) | | 5.2 | 5.0 | 4.8 | 4.6 | 4.9 | 5.0 | 5.0 | 5.1 | 5.2 | 5.3 |
| Gelation Time [min] | | 11 | 9 | 7 | 5 | 4 | 6 | 3 | 3 | 3 | 2 |
| **3h at 80°**C | | | | | | | | | | | |
| TS [MPa] | | 10.9 | 9.2 | 11.5 | 13.7 | 17 | 18.2 | 19.5 | 21.3 | 23 | 22.2 |
| EB [%] | | 128 | 108 | 86 | 80 | 89 | 88 | 79 | 71 | 69 | 34 |
| Em0.05-0.25%[MPa] | | 163 | 236 | 306 | 425 | 536 | 497 | 574 | 641 | 738 | 745 |
| Em 0.5-5%[MPa] | | 68 | 96 | 153 | 179 | 223 | 259 | 309 | 335 | 392 | 378 |
| 1.Tg (°C) | | -60 | -60 | -60 | -60 | -60 | -60 | -60 | -60 | -60 | -60 |
| 2.Tg (°C) | | 63 | 71 | 82 | 91 | 98 | 96 | 103 | 105 | 104 | 105 |
| **7d RT** | | | | | | | | | | | |
| TS [MPa] | | 9.8 | 8.6 | 10.5 | 12.8 | 15.4 | 15.6 | 16.3 | 18.2 | 20.4 | 18.7 |
| EB [%] | | 123 | 116 | 103 | 105 | 111 | 77 | 45 | 25 | 28 | 4 |
| Em0.05-0.25%[MPa] | | 110 | 162 | 294 | 372 | 432 | 514 | 597 | 668 | 761 | 751 |
| Em 0.5-5%[MPa] | | 57 | 80 | 141 | 172 | 208 | 251 | 295 | 329 | 380 | n.b. |

**Tabelle 4, *stark exotherme Reaktion**

| | OHZ | E34 | E35 | E36 | E37 | E38 | E39 | E40 | E41 | E42 | E43 |
|---|---|---|---|---|---|---|---|---|---|---|---|
| Polyolkomp. **K1** | | | | | | | | | | | |
| Reagem 5006 (A5) | 75 | 30 | 30 | 30 | 30 | 30 | 30 | 30 | 30 | 30 | 30 |
| Setathane 1150 (A1) | 155 | 34 | 32 | 30 | 28 | 28 | 27 | 26 | 25 | 24 | 23 |
| Polybutadien 45 HTLO (A4) | 48 | 30 | 30 | 30 | 30 | 28 | 27 | 26 | 25 | 24 | 23 |
| Desmophen T 4011 (A2) | 550 | 4 | 4 | 4 | 4 | 4 | 4 | 4 | 4 | 4 | 4 |
| 1,4-Butandiol (A3) | 1245 | 0 | 2 | 4 | 6 | 8 | 10 | 12 | 14 | 16 | 18 |
| Katalysator | | 0.1 | 0.1 | 0.1 | 0.1 | 0.06 | 0.06 | 0.06 | 0.06 | 0.06 | 0 |
| Sylosiv | | 2 | 2 | 2 | 2 | 2 | 2 | 2 | 2 | 2 | 2 |
| Polyisocyanatkomp. **K2** | | | | | | | | | | | |
| Desmodur 44MC | | 100 | 100 | 100 | 100 | 100 | 100 | 100 | 100 | 100 | 100 |
| Mixing ratio | | 26.6 | 31.8 | 37 | 42.2 | 47.9 | 53.3 | 58.8 | 64.2 | 69.7 | 75.1 |
| NCO/OH-ratio | | 1.1 | 1.1 | 1.1 | 1.1 | 1.1 | 1.1 | 1.1 | 1.1 | 1.1 | 1.1 |
| (A1+A4+A5)/(A2+A3) | | 4.07 | 1.84 | 1.16 | 0.83 | 0.65 | 0.53 | 0.44 | 0.37 | 0.32 | 0.28 |
| (A1+A2+A4+A5)/(A3) | | - | 4.36 | 2.12 | 1.37 | 1.02 | 0.80 | 0.65 | 0.55 | 0.47 | 0.41 |
| (A1+A5)/(A4) | | 5.2 | 5.0 | 4.8 | 4.6 | 4.9 | 5.0 | 5.0 | 5.1 | 5.2 | 5.3 |
| Gelation Time [min] | | 16 | 8 | 7 | 5 | 4 | 4 | 3 | 3 | 2* | 4 |
| **3h at 80**°C | | | | | | | | | | | |
| TS [MPa] | | 7.6 | 8.6 | 9.8 | 10.9 | 13.2 | 12 | 12.9 | 12.6 | 8.8 | 7.1 |
| EB [%] | | 162 | 120 | 116 | 103 | 90 | 57 | 36 | 12.1 | 5 | 6.8 |
| Em0.05-0.25%[MPa] | | 41 | 145 | 155 | 242 | 297 | 321 | 384 | 450 | 365 | 322 |
| Em 0.5-5%[MPa] | | 13.7 | 73 | 76 | 106 | 141 | 148 | 177 | 201 | 164 | 119 |
| **7d RT** | | | | | | | | | | | |
| TS [MPa] | | 7.9 | 8.6 | 10.3 | 10.4 | 12.4 | 11 | 13 | 12.3 | 9.2 | 7.8 |
| EB [%] | | 158 | 134 | 136 | 107 | 101 | 53 | 38 | 8 | 4 | 4 |
| Em0.05-0.25%[MPa] | | 57 | 137 | 156 | 239 | 289 | 322 | 426 | 461 | 422 | 382 |
| Em 0.5-5%[MPa] | | 15 | 66 | 74 | 95 | 135 | 142 | 191 | 211 | n.b. | 160 |
| 1.Tg (°C) | | -60 | -60 | -60 | -60 | -60 | -60 | -60 | -60 | -60 | -60 |
| 2.Tg (°C) | | 55 | 65 | 66 | 68 | 72 | 74 | 76 | 78 | 82 | 78 |

**Tabelle 5**

| | OHZ | R1 | R2 | R3 | R4 | R5 | R6 |
|---|---|---|---|---|---|---|---|
| Polyolkomp. **K1** | | | | | | | |
| Reagem 5006 (A5) | 75 | 0 | 98 | 94 | 64 | 30 | 30 |
| Setathane 1150 (A1) | 155 | 64 | 0 | 0 | 0 | 64 | 62 |
| Polybutadien 45 HTLO (A4) | 48 | 32 | 0 | 0 | 30 | 0 | 0 |
| Desmophen T 4011 (A2) | 550 | 4 | 0 | 4 | 4 | 4 | 4 |
| 1,4-Butandiol (A3) | 1245 | 0 | 0 | 0 | 0 | 0 | 2 |
| Katalysator | | 0.3 | 0.1 | 0.1 | 0.1 | 0.1 | 0.1 |
| Sylosiv | | 2 | 2 | 2 | 2 | 2 | 2 |
| Polyisocyanatkomp. **K2** | | | | | | | |
| Desmodur VL | | 100 | 100 | 100 | 100 | 100 | 100 |
| Mixing ratio | | 34.4 | 18 | 22.7 | 21.1 | 35.9 | 41.4 |
| NCO/OH-ratio | | 1.1 | 1.1 | 1.1 | 1.1 | 1.1 | 1.1 |
| (A1+A4+A5)/(A2+A3) | | 5.21 | - | 3.20 | 2.84 | 5.53 | 2.53 |
| (A1+A2+A4+A5)/(A3) | | - | - | - | - | - | 5.65 |
| (A1+A5)/(A4) | | 6.5 | - | - | 3.3 | - | - |
| Gelation Time [min] | | 30 | 49 | 52 | 21 | 43 | 26 |
| **3h at 80**°C | | | | | | | |
| TS [MPa] | | 9.5 | 3.8 | 6 | 4.6 | 12.6 | 12.3 |
| EB [%] | | 122.3 | 67 | 57 | 86 | 96 | 55 |
| Em0.05-0.25%[MPa] | | 32 | 20 | 65 | 16 | 139 | 352 |
| Em 0.5-5%[MPa] | | 7 | 13 | 40 | 11 | 74 | 192 |
| 1.Tg (°C) | | -60 | -38 | -38 | -53 | | |
| 2.Tg (°C) | | 52 | 50 | 62 | 53 | 57 | 67 |
| **7d RT** | | | | | | | |
| TS [MPa] | | 7.76 | | | | | |
| EB [%] | | 101.1 | | | | | |
| Em0.05-0.25%[MPa] | | 15.4 | | | | | |
| Em 0.5-5%[MPa] | | 5 | | | | | |

In den Tabellen 1 bis 5 sind die Komponenten der Polyolkomp. **K1**, respektive der Polyisocyanatkomp. **K2**, in Gewichtsteilen angegeben.

Die Angaben (A1+A4+A5)/(A2+A3) und (A1 +A2+A4+A5)/(A3) sowie (A1+A5)/(A4) in den Tabellen 1 bis 5 beziehen sich auf das Verhältnis der OH-Gruppen von **A1** Setathane 1150, **A2** Desmophen T 4011, A3 aliphatischem Diol, **A4** Polyvest HT, respektive **A5** Reagem 5006.

Die Bezeichnung "NCO/OH-ratio" weist das Verhältnis aller NCO-Gruppen der aromatischen Polyisocyanate B1 zu allen OH-Gruppen der Summe von **(A1+A2+A3+A4+A5)** aus.

Die Bezeichnung "Mixing ratio" weist den Anteil der Komponente **K2** in Gewichtsteilen aus, welcher zu 100 Gewichtsteilen der entsprechenden Komponente **K1** zugegeben wurde.

Die Bezeichnung "OHZ" steht für die Hydroxylzahl (OH-Zahl) der verwendeten Polyole.

"Gelation Time [min]" als Mass für die Offenzeit wurde die Zeit bis zur Klebefreiheit ("**tack-free time**") bestimmt. Dazu wurden einige Gramm des Klebstoffs in einer Schichtdicke von ca. 2 mm auf Pappkarton aufgetragen und im Normklima die Zeitdauer bestimmt, bis beim leichten Antippen der Oberfläche des Klebstoffs mittels einer Pipette aus LDPE erstmals keine Rückstände auf der Pipette mehr zurückblieben.

Bei **E1** bis **E43** handelt es sich um erfindungsgemässe Beispiele. Bei **R1** bis **R6** handelt es sich um Vergleichsbeispiele.

## Patentansprüche

1. Zweikomponentige Polyurethanzusammensetzung bestehend aus einer
Polyolkomponente **K1** und einer Polyisocyanatkomponente **K2**;
wobei die Polyolkomponente **K1**
mindestens ein Umsetzungsprodukt von Ricinusöl mit Ketonharzen mit einer OH-Zahl von 110 bis 200 mg KOH/g **A1**; und mindestens ein aliphatisches Triol mit einem mittleren Molekulargewicht von 170-500 g/mol und einer OH-Zahl von 400-1100 mg KOH/g, wobei es sich um Polyetherpolyole basierend auf 1,1,1-Trimethylolpropan handelt **A2**; und
bevorzugt mindestens ein aliphatisches Diol mit einem Molekulargewicht von 90-146 g/mol **A3**; und
mindestens ein Polybutadienpolyol mit einer mittleren OH-Funktionalität im Bereich von 2.1 bis 2.9, insbesondere 2.3 bis 2.7, und mit einem mittleren Molekulargewicht im Bereich von 2000 bis 4000 g/mol, insbesondere 2500 bis 3000 g/mol, und einer OH-Zahl von 40 - 100 **A4**; und
mindestens ein hydroxyliertes Tallöl-basiertes Polyesterpolyol **A5**;
umfasst,
und wobei die Polyisocyanatkomponente **K2**
mindestens ein aromatisches Polyisocyanat **B1** umfasst,
wobei das Verhältnis der OH-Gruppen von **(A1+A4+A5)/(A2+A3)** von 0.25 - 5 beträgt;
und wobei das Verhältnis aller NCO-Gruppen der aromatischen Polyisocyanate B1 : aller OH-Gruppen der Polyolkomponente **K1** = 0.95 : 1 - 1.25 : 1 beträgt.

2. Zweikomponentige Polyurethanzusammensetzung gemäss Anspruch 1, **dadurch gekennzeichnet, dass** das mindestens eine aliphatische Diol **A3** ausgewählt ist aus der Liste bestehend aus 1,4 Butandiol, 2-Ethyl-1,3-hexandiol, 3-Methyl-1,5-pentandiol und 1,5-Pentandiol, vorzugsweise ausgewählt aus der Liste bestehend aus 1,4 Butandiol und 1,5-Pentandiol, insbesondere handelt es sich um 1,4 Butandiol.

3. Zweikomponentige Polyurethanzusammensetzung gemäss einem der vorgehenden Ansprüche, **dadurch gekennzeichnet, dass** das Verhältnis aller NCO-Gruppen der aromatischen Polyisocyanate B1 : aller OH-Gruppen der Summe von (**A1**+**A2**+**A3**+**A4**+**A5**) = 0.95 : 1 - 1.25 : 1, insbesondere 1.05 : 1 - 1.15 : 1, beträgt.

4. Zweikomponentige Polyurethanzusammensetzung gemäss einem der vorgehenden Ansprüche, **dadurch gekennzeichnet, dass** das Verhältnis der OH-Gruppen von **(A1+A4+A5)/(A2+A3)** von 0.3 - 1.4, insbesondere von 0.3 - 1.0, vorzugsweise von 0.3 - 0.8, insbesondere bevorzugt 0.3 - 0.6, beträgt.

5. Zweikomponentige Polyurethanzusammensetzung gemäss einem der vorgehenden Ansprüche, **dadurch gekennzeichnet, dass** das Verhältnis der OH-Gruppen von **(A1+A2+A4+A5)/(A3)** von 0.4 -5, insbesondere von 0.4 - 3, vorzugsweise von 0.4 - 2, insbesondere bevorzugt 0.45 - 1.25, beträgt.

6. Zweikomponentige Polyurethanzusammensetzung gemäss einem der vorgehenden Ansprüche, **dadurch gekennzeichnet, dass** das Verhältnis der OH-Gruppen von **(A1+A5)/(A4)** von 2 - 15, insbesondere von 3 - 10, bevorzugt von 4 - 8, beträgt.

7. Zweikomponentige Polyurethanzusammensetzung gemäss einem der vorgehenden Ansprüche, **dadurch gekennzeichnet, dass** die Summe aller OH-Gruppen von (**A1**+**A2**+**A3**+**A4**+**A5**) ≥90%, vorzugsweise ≥95%, insbesondere ≥98%, insbesondere bevorzugt ≥99%, am meisten bevorzugt ≥99,5%, der Summe aller OH-Gruppen der zweikomponentigen Polyurethanzusammensetzung beträgt.

8. Zweikomponentige Polyurethanzusammensetzung gemäss einem der vorgehenden Ansprüche, **dadurch gekennzeichnet, dass** es sich bei dem aromatischen Polyisocyanat **B1** um monomeres MDI oder Oligomere, Polymere und Derivate abgeleitet von MDI, insbesondere mit einer mittleren NCO-Funktionalität von 2.0 bis 4.0, vorzugsweise 2.0 bis 3.0, insbesondere 2.1 bis 2.6, handelt.

9. Zweikomponentige Polyurethanzusammensetzung gemäss einem der vorgehenden Ansprüche, **dadurch gekennzeichnet, dass** es sich bei dem aromatischen Polyisocyanat **B1** um Oligomere, Polymere und Derivate abgeleitet von MDI, insbesondere um Polymere abgeleitet von MDI, insbesondere mit einer mittleren NCO-Funktionalität von 2.1 bis 2.6, handelt.

10. Zweikomponentige Polyurethanzusammensetzung gemäss einem der vorgehenden Ansprüche, **dadurch gekennzeichnet, dass** es sich bei dem aromatischen Polyisocyanat **B1** um Polymere abgeleitet von MDI, insbesondere mit einem Gewichtsanteil von Polymeren abgeleitet von MDI von 20 - 90 Gew.-%, bezogen auf das Gesamtgewicht des aromatischen Polyisocyanats **B1**, handelt.

11. Zweikomponentige Polyurethanzusammensetzung gemäss einem der vorgehenden Ansprüche, **dadurch gekennzeichnet, dass** die Summe der NCO-Gruppen, welche nicht von **B1** herrühren, ≤5%, insbesondere ≤2%, insbesondere bevorzugt ≤1%, am meisten bevorzugt ≤0.5%, beträgt, bezogen auf die Summe aller NCO -Gruppen der zweikomponentigen Polyurethanzusammensetzung.

12. Verfahren zum Verkleben von einem ersten Substrat mit einem zweiten Substrat umfassend die Schritte
- Mischen der Polyolkomponente (**K1**) und der Polyisocyanatkomponente (**K2**) einer zweikomponentigen Polyurethanzusammensetzung gemäss einem der Ansprüche 1 bis 11,
- Applizieren der vermischten Polyurethanzusammensetzung auf mindestens eine der zu verklebenden Substratoberflächen,
- Fügen der zu verklebenden Substrate innerhalb der Offenzeit,
- Aushärten der Polyurethanzusammensetzung.

13. Verklebter Artikel erhalten aus einem Verfahren gemäss Anspruch 12.

14. Verwendung einer zweikomponentigen Polyurethanzusammensetzung gemäss einem der Ansprüche 1 bis 11 als struktureller Klebstoff zum Verkleben von zwei Substraten.
